Europäisches Patentamt

European Patent Office

Office européen des brevets

(19)

(11) Veröffentlichungsnummer: **0 010 160**
**A1**

# (12) EUROPÄISCHE PATENTANMELDUNG

(21) Anmeldenummer: 79103437.4

(22) Anmeldetag: 14.09.79

(51) Int. Cl.³: **G 01 N 21/78**
**G 09 F 1/00**

(30) Priorität: 27.09.78 DE 2841991

(43) Veröffentlichungstag der Anmeldung:
**30.04.80 Patentblatt 80/9**

(84) Benannte Vertragsstaaten:
**BE CH DE FR GB IT NL SE**

(71) Anmelder: BAYER Aktiengesellschaft
Zentralbereich Patente,Marken und Lizenzen
Bayerwerk
D-5090 Leverkusen 1(DE)

(72) Erfinder: Diller, Werner, Dr.
Elisabeth-Langgaesser-Strasse 8
D-5090 Leverkusen(DE)

(72) Erfinder: Drope, Eckard, Dr.
Wiener Weg 58
D-5000 Koeln 40(DE)

(72) Erfinder: Ellendt, Günther, Dr.
Deswatinesstrasse 81
D-4150 Krefeld(DE)

(72) Erfinder: Reichold, Ernst, Dr.
Deswatinesstrasse 88
D-4150 Krefeld(DE)

(54) **Plakette zur Dosimetrie von reaktiven Gasen.**

(57) Plaketten zur schnellen nachträglichen Erkennung einer Überdosis von gesundheitsschädlichen Gasen sind für den Arbeitsschutz in der chemischen Industrie von grosser Bedeutung. Solche Plaketten weisen einen Indikator (4) auf, der sich bei Einwirkung des Gases verfärbt. Die visuelle Auswertung des Indikators wird wesentlich dadurch erleichtert, dass die Indikatorfläche durch unterschiedliche Abdeckung mit Membranen (2) und (3) in mehrere Messfelder mit abgestufter Empfindlichkeit unterteilt ist. Durch eine getrennte oder kombinierte visuelle Betrachtung der einzelnen Indikatorfelder is dann eine schnelle Zuordnung zu vorgegebenen Dosisteilbereichen möglich.

FIG.1

EP 0 010 160 A1

BAYER AKTIENGESELLSCHAFT        5090 Leverkusen, Bayerwerk
Zentralbereich
Patente, Marken und Lizenzen      Kl/eb    26. Sept. 1978

Plakette zur Dosimetrie von reaktiven Gasen

Die Erfindung betrifft eine Plakette zur schnellen Erkennung einer Dosis von reaktiven, insbesondere gesundheitsschädlichen Gasen mit einem Indikator, der sich bei Einwirkung des Gases verfärbt. Mit derartigen Plaketten kann z. B. die Dosis eines gesundheitsschädlichen Gases am Arbeitsplatz nachträglich abgelesen werden. Zu diesem Zweck wird die Plakette an der Arbeitskleidung einer Person befestigt und während der ganzen Arbeitszeit getragen. Bei Einwirkung eines toxischen Gases verfärbt sich der Indikator in charakteristischer Weise. Die Farbintensität ist normalerweise proportional zu $\lg \int c\, dt$, wobei c die Konzentration des Gases und t die Zeit bedeutet. Beim Auftreten einer Verfärbung hat sich der Träger der Plakette sofort beim Arzt zu melden.

Die Verfärbung des Indikators wird bisher mit einem Standard verglichen. Da eine solche Auswertung ziemlich zeitraubend und von apparativen Hilfsmitteln abhängig ist,

Le A 19 198 - Ausland

besteht bei einer toxischen Einwirkung die Gefahr, daß eventuelle Vergiftungsfälle nicht schnell genug erkannt werden. Für den frühzeitigen Beginn einer optimalen Therapie benötigt der behandelnde Arzt eine Aussage über die möglicherweise inhalierte Dosis. Der Erfindung liegt daher die Aufgabe zugrunde, eine Plakette zu entwickeln, die einfach und schnell, d.h. ohne technische Hilfsmittel, ausgewertet werden kann. Diese Aufgabe wird bei einer Plakette mit einem Farbindikator erfindungsgemäß in der Weise gelöst, daß die Indikator-Fläche durch unterschiedliche Abdeckung mit Membranen in mehrere Meßfelder unterteilt ist, deren Empfindlichkeit so abgestuft ist, daß durch eine getrennte oder kombinierte visuelle Betrachtung der einzelnen Indikatorfelder eine schnelle Zuordnung zu vorbestimmten Dosisteilbereichen ermöglicht wird. Die Abstufung der Meßbereiche geschieht in der Praxis durch eine Maskierung der Indikatorfelder mit Membranen von unterschiedlichem Diffusionswiderstand. Der Diffusionswiderstand ist proportional zur Dicke der Membran und ihrem Diffusionskoeffizient. Unter "Membranen" werden hier schichtförmige gaspermeable Porenkörper verstanden, z.B. Papier, gasdurchlässige Folien oder poröse Keramik-bzw. Sintermetallplatten.

Zweckmäßig ist jedem Indikatorfeld ein eigenes Fenster in der Plakette zugeordnet.

Die Vorteile der Erfindung liegen darin, daß die Plakette nach einer Exposition praktisch mit einem Blick ausgewertet werden kann. Die Unterteilung des Indikators in Felder mit abgestufter Empfindlichkeit bedeutet physikalisch eine Digitalisierung gegenüber der analogen photometrischen Auswertung. Darüber hinaus hat die neue Plakette den Vorteil, daß sie leicht und billig herzustellen ist.

Im folgenden wird ein Ausführungsbeispiel der Erfindung anhand von Zeichnungen näher erläutert. Es zeigen

Figur 1    eine Explosionszeichnung einer Plakette für die Phosgen-Dosimetrie und

Figur 2    verschiedene Expositionsstufen des Phosgenindikators.

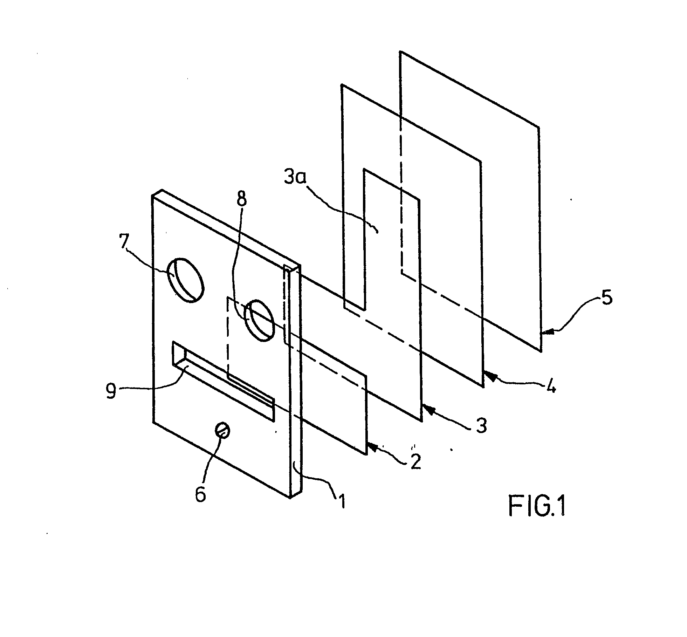

Die Plakette gemäß Figur 1 besteht aus der Vorderwand 1, den Abdeckmembranen 2 und 3, dem Indikator 4 und der Rückwand 5. Sie wird in der Weise zusammengebaut, daß der Indikator 4 zusammen mit den darüber befindlichen Abdeckmembranen 2 und 3 in die Rückwand 5 eingelegt wird. Anschließend wird die Vorderwand 1 aufgesetzt und mit einer Schraube 6 fixiert. Die Größe der Plakette ist so, daß sie mit Hilfe einer an der Rückwand befestigten Nadel bequem an der Kleidung einer Person befestigt werden kann.

Zur Phosgen-Messung kann der Indikator 4 aus einem Papierstreifen bestehen, der mit 4-(4'-Nitrobenzyl)-pyridin und N-Phenyl-benzylamin getränkt ist. Bei der Einwirkung von Phosgen auf diesen Indikator bildet sich eine rote Verfärbung, deren Intensität logarithmisch proportional ist dem Produkt von Phosgen-Konzentration und Einwirkungszeit (Dosis). Die Vorderwand 1 weist drei Fenster verschiedener Größe und Geometrie auf: Eine kreisförmige Öffnung 7 mit großem Durchmesser, eine kreisförmige Öffnung 8 mit kleinerem Durchmesser und eine rechteckförmige Öffnung 9. Die Abdeckmembranen 2 und 3, die z.B. aus Filterpapier bestehen, decken nur verschiedene Teilbereiche des Indikators 4 ab. Das Indikatorfeld, das sich hinter dem Kreisfenster 7 befindet, bleibt frei, d.h. es wird überhaupt nicht abgedeckt. Das dem kleineren Kreisfenster 8 entsprechende Indikatorfeld wird nur durch die

Le A 19 198

obere Verlängerung 3a der Membran 3 maskiert. Dagegen wird das dem Rechteckfenster 9 entsprechende Indikator-feld von der rechteckförmigen Membran 2 und zusätzlich von dem unteren rechteckförmigen Teil der Membran 3 abgedeckt. Beim Auftreten einer Phosgen-Konzentration trifft also das Phosgen durch das Fenster 7 unmittelbar auf den Indikator 4, während die Einwirkung auf die hinter den Fenstern 8 und 9 liegenden Indikatorfelder durch die Membranen 2 und 3 stufenförmig abgeschwächt wird. Die Abschwächung erfolgt aufgrund des Diffusionswiderstandes der Membranen. Auf diese Weise wird der Indikator 4 in Meßbereiche mit unterschiedlicher Empfindlichkeit unterteilt. Das dem Fenster 7 entsprechende Feld stellt den empfindlichsten Meßbereich dar, während das zum Fenster 9 gehörende Feld am unempfindlichsten ist. Die Unterteilung der Indikatorfläche in verschiedene Meßbereiche erfolgt am einfachsten, wie hier gezeigt, durch Vorschaltung von Membranen mit unterschiedlicher Dicke bzw. durch die Vorschaltung einer abgestuften Zahl von Membran-Elementen.

Der Meßbereichsumfang und die Abstufung der einzelnen Felder werden so gewählt, daß durch eine getrennte oder kombinierte visuelle Betrachtung der einzelnen Felder eine schnelle Zuordnung zu bestimmten Dosisteilbereichen ermöglicht wird. Die Festlegung der Dosisteilbereiche erfolgt z. B. entsprechend einer für Phosgen-Vergiftungen typischen Dosiswirkungsrelation, die sich klinisch in folgender Weise manifestiert:

1. 0 - 1 ppm min: Keine Exposition,
2. 1 - 70 ppm min: Leichte Reizerscheinungen, insgesamt noch ungefährliche Exposition,
3. 70 - 300 ppm min: Anzeichen von histologischen Ödemen; gesundheitsschädliche Exposition.

Le A 19 198

4.     > 300 ppm min: Klinisch manifestes Lungenödem;
                 lebensgefährliche Exposition.

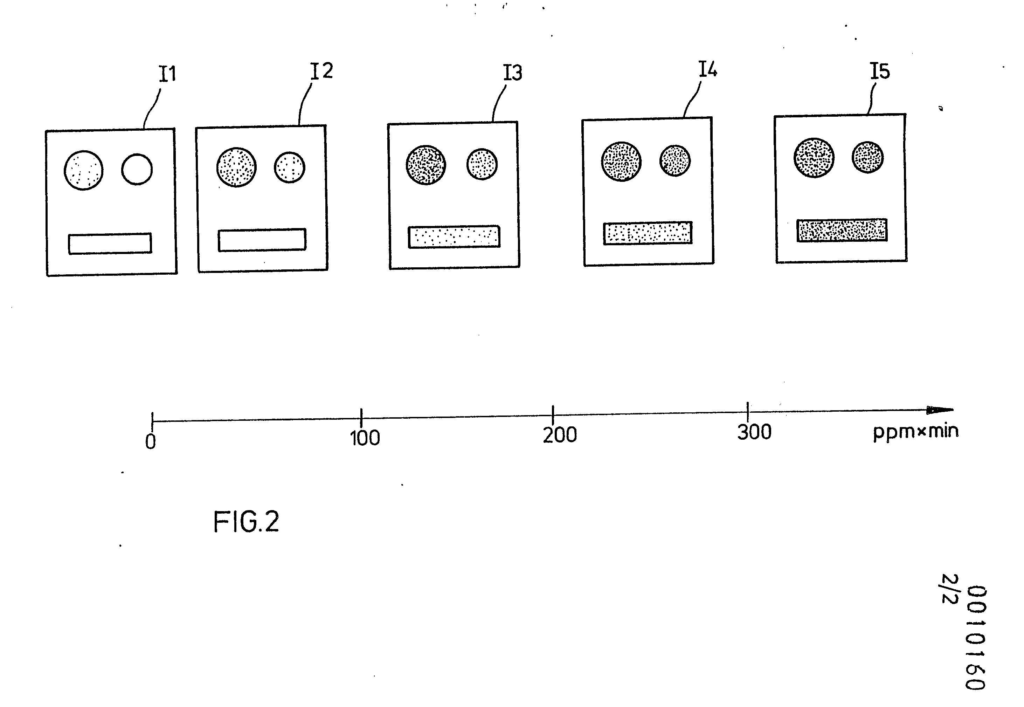

In Figur 2 sind Indikatoren $I_1$ bis $I_5$ dargestellt, die in einer Plakette gemäß Figur 1 von links nach rechts stufenweise mit einer höheren Phosgendosis beaufschlagt wurden. Das Ergebnis ist in der nachfolgenden Tabelle dargestellt.

| Indikator | Dosis | visuelle Auswertung d.Felder |
|---|---|---|
| $I_1$ | < 5 ppm min | ◯ beginnende Rotfärbung<br>○ keine Rotfärbung<br>▭ keine Rotfärbung |
| $I_2$ | 50 - 80 ppm min | ◯ mäßige Rotfärbung<br>○ beginnende Rotfärbung<br>▭ keine Rotfärbung |
| $I_3$ | 100 - 150 ppm min | ◯ starke Rotfärbung<br>○ mäßige Rotfärbung<br>▭ beginnende Rotfärbung |
| $I_4$ | 200 - 250 ppm min | ◯ starke Rotfärbung<br>○ starke Rotfärbung<br>▭ mäßige Rotfärbung |
| $I_5$ | > 300 ppm nin | ◯ starke Rotfärbung<br>○ starke Rotfärbung<br>▭ starke Rotfärbung |

Le A 19 198

Man erkennt aus diesem Beispiel, daß aufgrund der Unterteilung eines Indikators in Meßfelder mit unterschiedlicher Empfindlichkeit eine schnelle und sichere Zuordnung einer bestimmten Exposition zu einem der oben angegebenen Dosisteilbereiche ermöglicht wird. Dieser Vorteil wirkt sich insbesondere bei stärkeren Expositionen im Bereich von 200 - 400 ppm min aus, da mit zunehmender Dosis der Unterschied in der Farbdichte immer geringer wird. Ein Vergleichsstandard ist nicht erforderlich. Auf diese Weise kann der Arzt bei Vorlage der Plakette die Exposition ohne zusätzliche apparative Hilfsmittel klassifizieren und sofort die richtigen therapeutischen Maßnahmen einleiten.

Die erfindungsgemäße Plakette ist keineswegs auf medizinisch-diagnostische Anwendungen beschränkt. Sie ist z.B. zur Überwachung und nachträglichen Feststellung der Dosis einer korrosiven Atmosphäre geeignet, der eine Maschine oder ein empfindliches Bauelement ausgesetzt war. Der Hersteller einer Maschine kann z.B. im Falle von Schadenersatzansprüchen den Betrieb der Maschine in einer unzulässigen korrosiven Atmosphäre nachträglich feststellen.

Le A 19 198

0010160

Patentansprüche:

1. Plakette zur schnellen Erkennung einer Dosis von reaktiven, insbesondere gesundheitsschädlichen Gasen mit einem Indikator, der sich bei Einwirkung des Gases verfärbt, dadurch gekennzeichnet, daß die Indikatorfläche durch unterschiedliche Abdeckung mit Membranen (2, 3) in mehrere Meßfelder unterteilt ist, deren Empfindlichkeit so gewählt ist, daß durch eine getrennte oder kombinierte visuelle Betrachtung der einzelnen Indikator-Felder eine schnelle Zuordnung zu vorbestimmten Dosisteilbereichen ermöglicht wird.

2. Plakette nach Anspruch 1, dadurch gekennzeichnet, daß der Indikator (4) in Felder unterteilt ist, die durch Membranen (2,3) mit abgestuftem Diffusionswiderstand maskiert sind und die Abstufung entsprechend dem Meßbereichsumfang und der Zahl der Meßbereiche gewählt ist.

3. Plakette nach Anspruch 1 und 2, dadurch gekennzeichnet, daß den Indikator-Feldern getrennte Fenster (7, 8, 9) in der Vorderwand (1) der Plakette zugeordnet sind.

4. Plakette nach Anspruch 1 bis 3 zur Messung von Phosgen, gekennzeichnet durch einen Indikator, der aus einem mit 4-(4'-Nitrobenzyl)-pyridin und N-Phenylbenzylamin getränkten Papierstreifen besteht.

Le A 19 198

0010160

FIG.1

I1   I2   I3   I4   I5

0          100          200          300          ppm×min

FIG.2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 723 064 (LIOTTA) <br> * Ansprüche 1,5 * <br><br> -- | 1,2 |
| A | US - A - 3 924 219 (BRAUN) <br> * Ansprüche 1,2 * <br><br> -- | 1 |
| A | US - A - 3 985 017 (GOLDSMITH) <br> * Ansprüche 1,2 * <br><br> -- | 1 |
| A | FR - A - 1 104 835 (PARMELEE) <br> * Zusammenfassung a,n,o * <br><br> ---- | 1 |

**KLASSIFIKATION DER ANMELDUNG (Int.Cl. 3)**

G 01 N 21/78
G 09 F 1/00

**RECHERCHIERTE SACHGEBIETE (Int. Cl. 3)**

G 01 N 21/ 75
21/ 77
21/ 78

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angefuhrtes Dokument

&: Mitglied der gleichen Patent-familie, übereinstimmendes Dokument

Der vorliegende Recherchenbericht wurde fur alle Patentansprüche erstellt.

| Recherchenort | Abschlußdatum der Recherche | Prufer |
|---|---|---|
| Den Haag | 11-12-1979 | NICOLAS |

EPA form 1503.1. 06.78